# EUROPÄISCHE PATENTSCHRIFT

(11) **EP 0 714 564 B1**
(45) Veröffentlichungstag und Bekanntmachung des Hinweises auf die Patenterteilung: **29.01.1997**
(21) Anmeldenummer: 94922226.9
(22) Anmeldetag: 29.07.1994
(51) Int. Cl.: H02G 5/02, H02B 1/20

(54) **MEHRFELDRIGE SCHALTANLAGE MIT EINER LICHTBOGENBARRIERE**
MULTI-PATH SWITCHGEAR WITH AN ELECTRIC-ARC BARRIER
INSTALLATION DE COMMUTATION MULTICHAMP A BARRIERE D'ARC

(30) Priorität: 19.08.1993 DE 4328241
(43) Veröffentlichungstag der Anmeldung: 05.06.1996
(73) Patentinhaber: SIEMENS AKTIENGESELLSCHAFT, 80333 München (DE)
(72) Erfinder: GANSER, Bodo, D-63517 Rodenbach (DE); SCHUCK, Gottfried, D-63743 Aschaffenburg (DE)
(86) Internationale Anmeldenummer: DE9400908
(87) Internationale Veröffentlichungsnummer: WO9505694

(56) Entgegenhaltungen:
- EP-A- 0 442 591
- DE-A- 1 191 458
- FR-A- 1 105 108
- FR-A- 2 335 981

## Beschreibung

Die Erfindung betrifft eine mehrfeldrige Schaltanlage mit einem Gerüst und mit einer in dem Gerüst isoliert abgestützten, mehrere Teilleiter mit rechteckigen Querschnitt umfassenden Sammelschienenanordnung und einer die Wanderung eines Störlichtbogens entlang der Sammelschienenanordnung unterbrechenden Lichtbogenbarriere aus Isolierteilen und nahe den Isolierteilen angeordneten Schutzelektroden, wobei die Isolierteile als die Teilleiter formschlüssig umschließende Sammelschienenhalter ausgebildet sind und die Schutzelektroden bezüglich der Wanderrichtung eines Störlichtbogens beidseitig der Isolierteile angeordnet und mit Erdpotential verbunden sind.

Eine Schaltanlage dieser Art ist durch die FR 1 105 108 A bekanntgeworden. Die Schutzelektroden haben dabei die Gestalt von Schienen, die sich über die Breite der Sammelschienen-anordnung erstrecken und dabei die Endkanten der Isolierteile umgreifen. Bei einer Durchführungsplatte können die Schutzelektroden als Rahmen ausgebildet sein, der die Durchführungsplatte am Rand umschließt. In jedem Fall besteht ein relativ großer Abstand zwischen den Schutzelektroden und den Leitern der Sammelschienenanordnung. Dies führt zu einer relativ großen Länge eines eventuell entstehenden Störlichtbogens mit einem entsprechend großen Energieumsatz.

Der Erfindung liegt die Aufgabe zugrunde, eine im Störungsfall mit geringerem Energieumsatz arbeitende Anordnung von Schutzelektroden zu schaffen, die auch für Sammelschienenanordnungen mit parallelen Teilleitern verwendbar ist.

Diese Aufgabe wird gemäß der Erfindung dadurch gelöst, daß die Schutzelektroden Bestandteil eines mit dem Gerüst der Schaltanlage verbundenen Leitstückes sind, das einen in geringem Abstand parallel zu einer Seite der Teilleiter angeordneten Abschnitt als eine der Schutzelektroden sowie durch das derselben Seite der Teilleiter zugeordnete Isolierteil abgedichtet hindurchragende Fortsätze als weitere Schutzelektroden besitzt. Die Isolierteile bilden dabei einen Schirm, der im Störfall für eine hohe einseitige Konzentration von ionisierten Gasen im Bereich der Lichtbogenbarriere sorgt. Das Leitstück mit den Schutzelektroden bewirkt ein stabiles Brennen eines Lichtbogens. Damit wird ein Weiterlaufen oder eine Neuzündung eines Lichtbogens zuverlässig vermieden. Da zwischen den Schutzelektroden und den Teilleitern nur die minimal erforderliche Luftstrecke zu bestehen braucht, ist der Abstand verhältnismäßig gering. Daher ist auch die Lichtbogenlänge kurz und der Energieumsatz im Fehlerfall mäßig.

Das Leitstück kann aus Blech bestehen und kann im Bereich der Schutzelektroden durch Falzen doppellagig ausgebildet sein. Auf diese Weise ist das Leitstück gleichermaßen einfach und preiswert herstellbar und besitzt dennoch im Fehlerfall eine ausreichende Standzeit.

Zur Verwendung im Zusammenhang mit einer dreiphasigen Sammelschienenanordnung mit vertikal übereinander angeordneten Teilleitern der Phasen und in einer vertikalen Ebene liegenden Breitseiten der Teilleiter kann das Leitstück sich in der Höhe über wenigstens die vier mittleren Teilleiter erstrecken und die durch die Fortsätze gebildeten Schutzelektroden können die Zwischenräume zwischen den Phasen überbrückend angeordnet sein. Das gleiche Leitstück ist daher auch für Sammelschienenanordnungen mit geringerer Höhe geeignet.

Das Leitstück kann zusammen mit den Isolierteilen und einem Haltewinkel am Gerüst der Schaltanlage befestigt sein, wobei der Haltewinkel zur Stützung eines Isolierteiles der Lichtbogenbarriere auf der dem Leitstück gegenüberliegenden Seite der Teilleiter dient.

Die Erfindung wird im folgenden anhand des in den Figuren dargestellten Ausführungsbeispieles näher erläutert.

Die Figur 1 zeigt eine Ansicht einer Sammelschienen-anordnung mit zwei übereinander angeordneten Leitern je Phase im Bereich zweier benachbarter Schaltfelder einer Niederspannungs-Schaltanlage.

Die Figur 2 zeigt die Anordnung gemäß der Figur 1 in einer Seitenansicht mit entlang der Schnittlinie II-II in Figur 1 geschnittener Sammelschienenanordnung.

Die Figur 3 zeigt die Anordnung gemäß den Figuren 1 und 2 in der Draufsicht in einem gegenüber den Figuren 1 und 2 vergrößerten Maßstab.

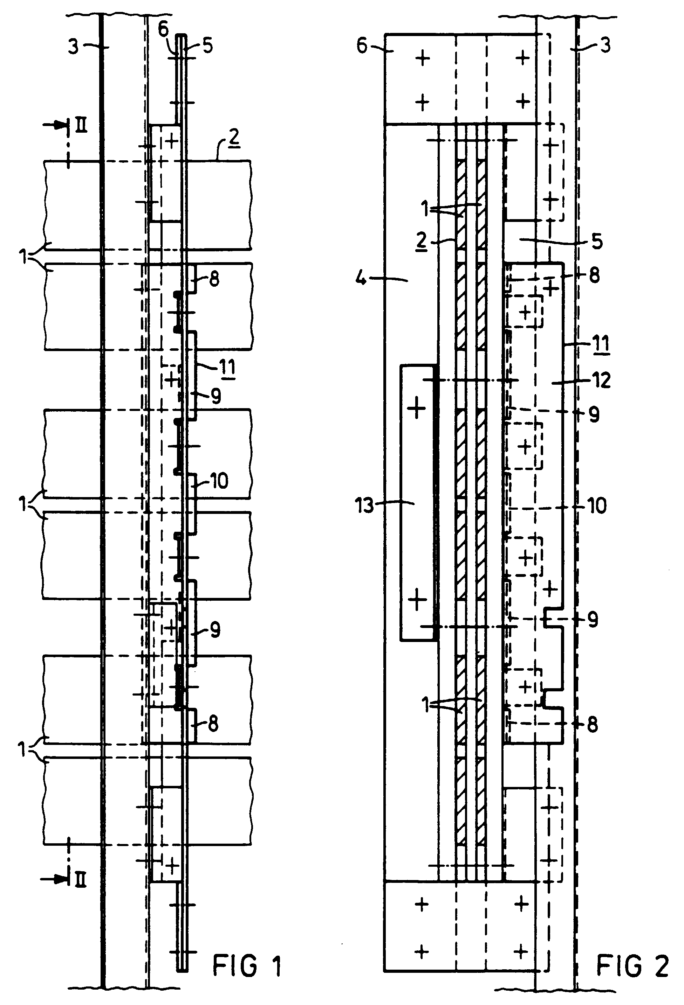

Bei der nachfolgenden Beschreibung eines Ausführungsbeispieles der Erfindung wird von einer Sammelschienenanordnung ausgegangen, wie sie beispielsweise in der Figur 4 der EP 0 442 591 A2 gezeigt ist. In diesem Zusammenhang ist in den vorliegenden Figuren 1, 2 und 3 derjenige Bereich eines Sammelschienenzuges gezeigt, der sich am Übergang von einem Feld einer Schaltanlage zum benachbarten Feld befindet. In dem vorliegenden Beispiel bilden Teilleiter 1 eine Sammelschienenanordnung 2, wobei jede Phase jeweils vier Teilschienen 1 umfaßt, die paarweise nebeneinander und übereinander angeordnet sind. Die Teilschienen 1 sind durch Isolierteile 4, 5 und 6 an einem Gerüst 3 der Schaltanlage befestigt, das in den Figuren abgebrochen dargestellt ist. Ein Beispiel für das Gerüst einer Schaltanlage ist der DE-A-40 05 069 zu entnehmen. Die Isolierteile 4, 5 und 6 bilden einen Sammelschienenhalter, der an den Teilleitern formschlüssig anliegt. Zugleich sind die Isolierteile 4, 5 und 6 Bestandteil einer Lichtbogenbarriere, zu der ferner Schutzelektroden 7, 8, 9 und 10 gehören, die durch ein Leitstück 11 gebildet sind.

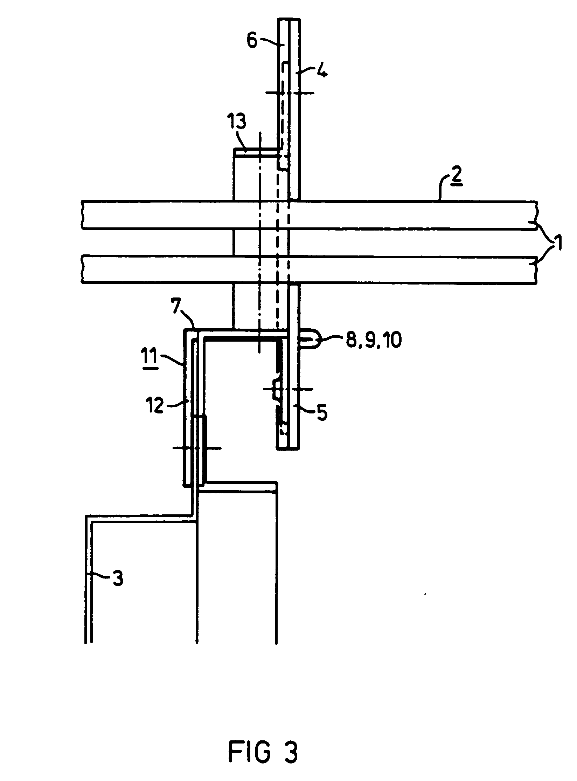

Das Leitstück erstreckt sich in der Hohe über vier der insgesamt sechs Teilleiter 1, wie den Figuren 1 und 2 näher zu entnehmen ist. Der Draufsicht gemäß der Figur 3 ist näher zu entnehmen, daß das Leitstück 11 einen parallel zur Breitseite der Teilleiter 1 angeordneten Abschnitt 7 und in dessen Verlängerung Fortsätze 8, 9 und 10 besitzt, die durch angepaßte Öffnungen des Isolierteiles 5 hindurchragen, wodurch die Durchtrittsstelle relativ dicht ist. Der Abschnitt 7 und die Fortsätze 8, 9 und 10 weisen aufgrund einer Falzung die doppelte Blechstärke auf. Ein quer zu der Sammelschienen-anordnung 2 verlaufend angeordneter Schenkel 12 dient zur Befestigung des Leitstückes 11 an dem Gerüst 3, wobei die gleiche Befestigung auch einen Haltewinkel 13 für das Isolierteil 5 erfaßt.

Den Figuren 1 und 2 ist zu entnehmen, daß das Leitstück 11 insgesamt fünf Fortsätze als Schutzelektroden 8, 9 und 10 in wechselnder Folge aufweist. Je eine Schutzelektrode 8 mit geringer Höhe befindet sich am oberen und am unteren Ende des Leitstückes 11. Zwei Schutzelektroden 9 mit einer größeren Höhe überdecken den Bereich zwischen den benachbarten Teilleitern 1 der unterschiedlichen Phasen. Die Hohe der mittleren Schutzleektrode 10 liegt zwischen der Höhe der Schutzelektroden 8 und 9 und überdeckt den Abstand zwischen den übereinander verlaufenden Teilschienen 1 der mittleren Phase.

Ein entlang den Sammelschienenanordnung 2 wandernder Störlichtbogen wird von den Isolierteilen 4, 5 und 6 zunächst am Weiterlaufen in das benachbarte Schaltfeld gehindert. Bei der Annäherung an das Leitstück 11 springt der Störlichtbogen von den Teilschienen 1 auf das geerdete Leitstück 11 über und wird auf diese Weise festgehalten. Zu einer Durchzündung zur anderen Seite der Isolierteile 4, 5 und 6 und somit in das benachbarte Schaltfeld kann es daher nicht kommen. Sinngemäß dieselben Vorgänge laufen ab, wenn sich ein Störlichtbogen von der gegenüberliegenden Seite der Lichtbogenbarriere nähert, wobei nun die Schutzelektroden 8, 9 und 10 in Gestalt der Fortsätze des Leitstückes 11 die Funktion einer Schutzelektrode übernehmen.

Wie näher den Figuren 1 und 2 zu entnehmen ist, ist das Leitstück 6 sowohl für die gezeigte, in der Höhe insgesamt sechs Schienen aufweisende Sammelschienenanordnung 2 als auch für niedrigere, beispielsweise nur drei Schienen umfassende Sammelschienenanordnungen verwendbar. In jedem Fall trifft ein Störlichtbogen auf geerdete Schutzelektroden, die durch den parallelen Abschnitt 7 bzw. die Fortsätze 8, 9 und 10 des Leitstückes 11 gebildet sind.

## Patentansprüche

1. Mehrfeldrige Schaltanlage mit einem Gerüst (3) und mit einer in dem Gerüst (3) isoliert abgestützten, mehrere Teilleiter (1) mit rechteckigem Querschnitt umfassenden Sammelschienenanordnung (2) und einer die Wanderung eines Störlichtbogens entlang der Sammelschienenanordnung (2) unterbrechenden Lichtbogenbarriere aus Isolierteilen (4, 5, 6) und nahe den Isolierteilen angeordneten Schutzelektroden (7, 8, 9, 10), wobei die Isolierteile (4, 5, 6) als die Teilleiter (1) formschlüssig umschließende Sammelschienenhalter ausgebildet sind und die Schutzelektroden (7, 8, 9, 10) bezüglich der Wanderrichtung eines Störlichtbogens beidseitig der Isolierteile (4, 5, 6) angeordnet und mit Erdpotential verbunden sind,
**dadurch gekennzeichnet,** daß die Schutzelektroden (7, 8, 9, 10) Bestandteil eines mit dem Gerüst (3) verbundenen Leitstückes (11) sind, das einen in geringem Abstand parallel zu einer Seite der Teilleiter (1) angeordneten Abschnitt als eine (7) der Schutzelektroden (7, 8, 9, 10) sowie durch die derselben Seite der Teilleiter (1) zugeordneten Isolierteile (4) abgedichtet hindurchragende Fortsätze als weitere Schutzelektroden (8, 9, 10) besitzt.

2. Schaltanlage nach Anspruch 1,
**dadurch gekennzeichnet,** daß das Leitstück (11) aus Blech besteht und im Bereich der Schutzelektrode (7, 8, 9, 10) durch Falzen doppellagig ausgebildet ist.

3. Schaltanlage nach Anspruch 1 oder 2,
**dadurch gekennzeichnet,** daß für eine dreiphasige Sammelschienenanordnung (2) mit vertikal übereinander angeordneten Teilleitern (1) der Phasen und in einer vertikalen Ebene liegenden Breitseiten der Teilleiter (1) das Leitstück (11) sich in der Höhe über wenigstens die vier mittleren Teilleiter (1) erstreckt und daß die durch die Fortsätze gebildeten Schutzelektroden (8, 9, 10) die Zwischenräume zwischen den Teilleitern (1) überbrückend angeordnet sind.

4. Schaltanlage nach einem der vorangehenden Ansprüche,
**dadurch gekennzeichnet,** daß das Leitstück (11) zusammen mit den Isolierteilen (4, 5, 6) und einem Haltewinkel (12) am Gerüst (3) der Schaltanlage befestigt ist, wobei der Haltewinkel (12) zur Stützung eines Isolierteiles (4) auf der dem Leitstück (11) gegenüberliegenden Seite der Teilleiter (1) dient.

## Claims

1. Multi-panel switching station having a framework (3) and having a busbar arrangement (2) which is supported in an insulated manner in the framework (3) and comprises a plurality of conductor elements (1) having a rectangular cross-section, and having an arc barrier, which interrupts the movement of a fault arc along the busbar arrangement (2) and is made of insulating parts (4, 5, 6), and having protective electrodes (7, 8, 9, 10) which are arranged close to the insulating parts, the insulating parts (4, 5, 6) being designed as busbar holders which surround the conductor elements (1) in a positively locking manner, and the protective electrodes (7, 8, 9, 10) being arranged on both sides of the insulating parts (4, 5, 6) with respect to the movement direction of a fault arc and being connected to earth potential, characterized in that the protective electrodes (7, 8, 9, 10) area component of a guide member (11) which is connected to the framework (3), has as one (7) of the protective electrodes (7, 8, 9, 10) a section which is arranged a short distance away from and parallel to one side of the conductor elements (1) and has as further protective electrodes (8, 9, 10) projections which pass in a sealed manner through insulating parts (4) which are assigned to the same side of the conductor elements (1).

2. Switching station according to Claim 1, characterized in that the guide member (11) is composed of sheet metal and is designed with two layers, by folding, in the region of the protective electrodes (7, 8, 9, 10).

3. Switching station according to Claim 1 or 2, characterized in that, for a three-phase busbar arrangement (2) having conductor elements (1) for the phases arranged vertically one above the other and in which the broadsides of the conductor elements (1) are located in a vertical plane, the guide member (11) extends at a level above at least the four central conductor elements (1), and in that the protective electrodes (8, 9, 10) which are formed by the projections are arranged such that they bridge over the intermediate spaces between the conductor elements (1).

4. Switching station according to one of the preceding claims, characterized in that the guide member (11) is mounted, together with the insulating parts (4, 5, 6) and a retaining bracket (12), on the framework (3) of the switching station, the retaining bracket (12) being used to support an insulating part (4) on the side of the conductor elements (1) opposite the guide member (11).

## Revendications

1. Installation de coupure multichamps comportant un châssis (3) et un dispositif (2) de barres collectrices en appui de manière isolée dans le châssis (3) et comprenant plusieurs conducteurs partiels (1) de section transversale rectangulaire et une barrière d'arcs interrompant la progression d'un arc parasite le long du dispositif (2) de barres collectrices et constitué de pièces isolantes (4,5,6) et d'électrodes (7,8,9,10) de protection montées à proximité des pièces isolantes, les pièces isolantes (4,5,6) étant formées de fixations de barres collectrices entourant par complémentarité de forme les conducteurs (1) partiels et les électrodes (7,8,9,10) de protection étant montées des deux côtés des pièces isolantes (4,5,6) par rapport à la direction de progression d'un arc électrique parasite et étant reliées au potentiel de terre,
caractérisé en ce que les électrodes (7,8,9,10) de protection font partie d'une pièce (11) conductrice, qui est reliée au châssis (3) et qui a un tronçon parallèle à un côté des conducteurs partiels (1) et à faible distance de celui-ci en tant qu'une (7) des électrodes (7,8,9,10) de protection, ainsi que des prolongements en saillie de manière étanche des pièces (4) isolantes associées au même côté des conducteurs partiels (1) en tant qu'autres électrodes (8,9,10) de protection.

2. Installation de coupure suivant la revendication 1,
caractérisée en ce que la pièce conductrice (11) est en tôle et est formée dans la zone de l'électrode (7,8,9,10) de protection par repliement sur deux couches.

3. Installation de coupure suivant la revendication 1 ou 2,
caractérisée en ce que pour un dispositif (2) de barres collectrices triphasé, dont les conducteurs partiels (1) des phases sont superposés verticalement et dont les côtés larges des conducteurs (1) partiels se trouvent dans un plan vertical, la pièce (11) conductrice s'étend en hauteur sur au moins les quatre conducteurs partiels (1) du milieu et les électrodes (8,9,10) de protection formées par les prolongements enjambent les intervalles compris entre les conducteurs partiels (1).

4. Installation de coupure suivant l'une des revendications précédentes, caractérisée en ce que la pièce (11) conductrice est fixée, conjointement avec les pièces isolantes (4,5,6) et une cornière (12) de maintien, au châssis (3) de l'installation de coupure, la cornière (12) de maintien servant à appuyer une pièce isolante (4) sur le côté des conducteurs partiels (1), qui est en vis-à-vis de la pièce conductrice (11).
